# EUROPEAN PATENT APPLICATION

(11) **EP 4 806 733 A1**
(43) Date of publication of application: **16.09.2026**
(21) Application number: 25217881.9
(22) Date of filing: 24.11.2025
(51) Int. Cl.: B60R 21/232

(54) **CURTAIN AIRBAG FOR VEHICLE**

(30) Priority: 13.03.2025 KR 20250032898
(71) Applicant: Hyundai Mobis Co., Ltd., Gangnam-gu Seoul 06141 (KR)
(72) Inventor: KIM, Ju Kyung, 16891 Yongin-si (KR)
(74) Representative: Vossius & Partner Patentanwälte Rechtsanwälte mbB

(57) **Abstract**

A curtain airbag for a vehicle and a system therefor are provided. The curtain airbag includes a main cushion (100), and an auxiliary cushion (200) to overlap with a portion of the main cushion and support the main cushion through inflation.

## Description

### BACKGROUND

### 1. Field

The present disclosure relates to a curtain airbag for a vehicle.

### 2. Description of the Related Art

A curtain airbag for a vehicle is an airbag that is deployed between a roof of the vehicle and a window to protect occupants in the vehicle during an external impact on the vehicle. In particular, the curtain airbag is designed for side collisions of the vehicle. The curtain airbag primarily protects the head and upper body of occupants.

Among the test items for evaluating the performance of curtain airbags, EJM (Ejection Mitigation) is an item that evaluates the degree to which occupants are ejected out of the vehicle, that is, the amount of occupant ejection from the vehicle. Meanwhile, recently, vehicles with various concepts are emerging due to the development of autonomous driving technology and other factors. Examples include low-floor vehicles with low vehicle body height to maximize the efficiency of interior space, and vehicles with bulkheads inside the vehicle.

Such vehicles have a problem that they have large windows and it is difficult to apply tethers, making it difficult to satisfy EJM performance.

The above matters disclosed in this section are merely for enhancement of understanding of the general background of the disclosure and should not be taken as an acknowledgement or any form of suggestion that the matters form the related art already known to a person skilled in the art.

### SUMMARY

Therefore, the present disclosure has been made in view of the above problems, and it is an object of the present disclosure to provide a curtain airbag for a vehicle that can satisfy EJM performance in various vehicles.

Objects are not limited to the technical objects mentioned above, and other technical objects not mentioned can be clearly understood by a person skilled in the art to which the present disclosure belongs from the description below.

The above and other objects can be accomplished by the provision of a curtain airbag for a vehicle according to the present disclosure comprising a main cushion and an auxiliary cushion configured to overlap with a portion of the main cushion and support the main cushion through inflation.

In a general aspect of the disclosure, a curtain airbag for a vehicle includes a main cushion, and an auxiliary cushion configured to overlap with a portion of the main cushion and support the main cushion through inflation.

The auxiliary cushion may be provided at a side end portion of the main cushion and include a first portion and a second portion, wherein the auxiliary cushion may be configured such that, through inflation, the first portion supports the main cushion and the second portion supports a trim of the vehicle.

The auxiliary cushion may extend from the main cushion in a longitudinal direction, wherein the auxiliary cushion may be folded such that the auxiliary cushion and the main cushion overlap with each other, and wherein an end of the auxiliary cushion and an end of the main cushion may be connected to each other.

The end of the auxiliary cushion and the end of the main cushion may be fixed by sewing to be in contact with each other.

The end of the main cushion that contacts the end of the auxiliary cushion may be positioned in an inactive area that does not inflate, wherein the end of the auxiliary cushion may be positioned in the inactive area.

The curtain airbag may further include a tether, wherein the end of the auxiliary cushion and the end of the main cushion may be connected to each other by the tether.

The auxiliary cushion may be folded toward an outboard of the vehicle.

The auxiliary cushion may be provided at a front end or a rear end of the main cushion.

When the auxiliary cushion of the curtain airbag is applied to a front row of the vehicle, the auxiliary cushion may be provided at the rear end of the main cushion, and when the auxiliary cushion of the curtain airbag is applied to a rear row of the vehicle, the auxiliary cushion may be provided at the front end of the main cushion.

In another general aspect, a curtain airbag system for a vehicle includes a main cushion, and an auxiliary cushion configured to overlap with a portion of the main cushion and support the main cushion through inflation, wherein, upon deployment, a chamber is formed by the inflation of the main cushion through the chamber formed by the inflation of the auxiliary cushion, and wherein the auxiliary cushion supports the chamber to prevent the main cushion from being pushed by a deployment force when the main cushion is inflated to enhance ejection mitigation (EJM) performance of the vehicle.

The auxiliary cushion may be provided at a side end portion of the main cushion and comprises a first portion and a second portion, wherein the auxiliary cushion may be configured such that, through inflation, the first portion supports the main cushion and the second portion supports a trim of the vehicle.

The auxiliary cushion may extend from the main cushion in a longitudinal direction, wherein the auxiliary cushion may be folded such that the auxiliary cushion and the main cushion overlap with each other, and wherein an end of the auxiliary cushion and an end of the main cushion may be connected to each other.

The auxiliary cushion may be provided at a front end or a rear end of the main cushion.

According to the curtain airbag for a vehicle of the present disclosure, the auxiliary cushion supports the chamber formed by the inflation of the main cushion through the chamber formed by the inflation of the auxiliary cushion, thereby preventing the main cushion from being pushed by the deployment force when the main cushion is inflated, thereby enhancing the EJM performance of the vehicle.

Effects obtained from the present disclosure are not limited to the effects mentioned above, and other effects not mentioned can be clearly understood by a person skilled in the art to which the present disclosure belongs from the description below.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 and FIG. 2 illustrate a curtain airbag for a vehicle according to an embodiment of the present disclosure.
FIG. 3 illustrates a state in which the curtain airbag for a vehicle according to the present disclosure is deployed.
FIG. 4 and FIG. 5 illustrate different embodiments for fixing the main cushion and the auxiliary cushion.
FIG. 6 illustrates a curtain airbag applied to a rear row.

### DETAILED DESCRIPTION

Hereinafter, embodiments of the present disclosure will be described in detail with reference to the accompanying drawings, wherein the same or similar elements are designated by the same reference numerals regardless of the numerals in the drawings, and redundant description thereof will be omitted. In describing the embodiments disclosed in the present specification, when it is determined that detailed descriptions of related known technologies may obscure the gist of the embodiments disclosed in the present specification, the detailed descriptions will be omitted. In addition, the accompanying drawings are only for easily understanding the embodiments disclosed in the present specification, and the technical ideas disclosed in the present specification are not limited by the accompanying drawings, and it should be understood to include all changes, equivalents or substitutes included in the spirit and technical scope of the present disclosure. The following disclosure is not intended to limit the present disclosure to the described form or specific field, and it is considered that various alternative aspects and modifications to the present disclosure are possible, whether explicitly described or implied in the present specification. A person skilled in the art to which the present disclosure belongs will recognize that the form and details of the present disclosure may be changed. The present disclosure content is described with reference to specific aspects. However, as understood by a person skilled in the art to which the present disclosure belongs, the various aspects disclosed in the present specification may be modified or otherwise implemented in various other ways without departing from the spirit and scope of the present disclosure content. Therefore, the following description should be considered illustrative, and is for the purpose of teaching those skilled in the art to which the present disclosure belongs how to make and use various embodiments. It will be understood that the forms of the disclosure shown and described in the present specification will be taken as representative embodiments. Equivalent elements, or materials, processes or steps may be substituted for those representatively illustrated and described in the present disclosure. Expressions such as "including", "comprising", "incorporating", "consisting of", "have", "is", etc., used in describing the present disclosure should be interpreted in a non-exclusive manner, that is, to allow items, components or elements not explicitly described to be indicated. In addition, references to the singular should be interpreted to include those related to the plural.

In addition, the various embodiments disclosed in the present specification should be taken in an illustrative and explanatory sense, and should not be interpreted as limiting the content of the present disclosure. All references to joining (for example, attached, affixed, coupled, connected, etc.) are used only to help understanding of the present disclosure, and do not limit the position, direction, or use of the configuration or the methods disclosed in the present specification. Therefore, when joining references exist, they should be interpreted broadly. Moreover, in these joining references, it is not determined that two or more elements are directly connected to each other. Additionally, all numerical terms, for example, "first", "second", "third", "primary", "secondary", "main" or any other general terms or numerical terms, should be taken only as identifiers to assist understanding of the various components, forms, variations or modifications of the present disclosure, and do not mean any limitation to any component, form, variation or modification or their order or preference. That is, these expressions may be used to describe various components, but the components are not limited by the expressions. The expressions are used only for the purpose of distinguishing one component from another component.

The suffixes "module" and "unit" for components used in the following description are given or used in consideration of only the ease of writing the specification, and do not have meanings or roles that are distinguished from each other.

When it is mentioned that a component is "connected" to or "connected" to another component, it should be understood that it may be directly connected or connected to the other component, but other components may exist in between. On the other hand, when it is mentioned that a component is "directly connected" to or "directly connected" to another component, it should be understood that no other components exist in between.

Any number of components or various components among the configurations described in the present specification may be included in the disclosure described in the present specification. Components may include any combination of the features described in the present specification and may be arranged in any configuration among the various configurations described in the present specification. Concepts regarding the structure and arrangement of the components of the present disclosure as well as their use and operation may be applied to any number of embodiments in any combination as well as the specific embodiments discussed in the present specification. Embodiments including those having various features of various arrangements are described below with reference to the drawings.

Hereinafter, various embodiments disclosed in the present specification will be described in detail with reference to the accompanying drawings, and the same or similar components will be given the same reference numbers regardless of the drawing symbols, and redundant description thereof will be omitted.

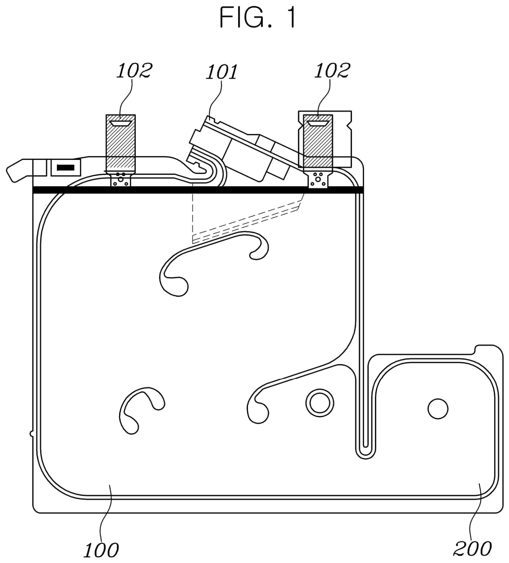

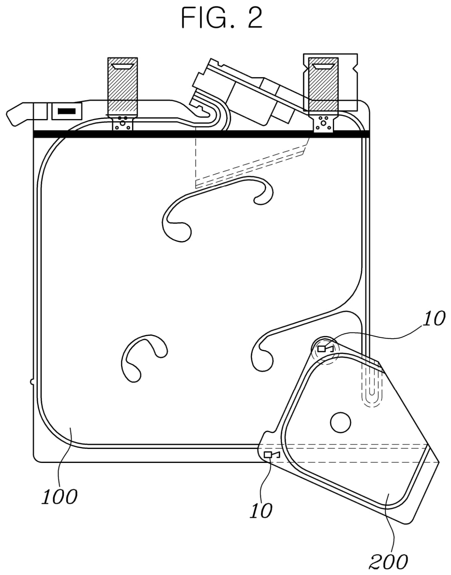

Referring to FIG. 1 and FIG. 2, which illustrate a curtain airbag for a vehicle according to an embodiment of the present disclosure, the curtain airbag for a vehicle according to the present disclosure may be manufactured in various ways. For example, a main cushion 100 may be formed by joining a pair of panels to form the main cushion 100, and an auxiliary cushion 200 may be formed by joining another pair of panels to form the auxiliary cushion 200, and the auxiliary cushion 200 may be connected to the main cushion 100 to manufacture the curtain airbag for a vehicle. In the process of connecting the main cushion 100 and the auxiliary cushion 200, they may be connected so as to communicate with each other.

Alternatively, to integrally form the main cushion 100 and the auxiliary cushion 200, a pair of panels may be joined to manufacture the curtain airbag for a vehicle.

Regardless of the method of manufacturing the curtain airbag, the present disclosure provides a curtain airbag in which a portion of the area of the main cushion 100 and the auxiliary cushion 200 overlap.

The main cushion 100 is a configuration that is inflated during a collision of the vehicle in the curtain airbag to directly protect the head and upper body of occupants. A diffuser coupling port 101 to which a diffuser for supplying gas generated from an inflator to the main cushion 100 is coupled is formed at one end of the main cushion 100. In addition, straps 102 for connecting the curtain airbag to the vehicle body may be further provided at an upper end of the main cushion 100.

Meanwhile, as described above, the main cushion 100 may not be deployed at the correct position due to the deployment force of the main cushion 100, and the main cushion 100 may be pushed rearward. Accordingly, when the main cushion 100 is deployed, an auxiliary cushion 200 for supporting the main cushion 100 is simultaneously provided to prevent the main cushion 100 from being pushed rearward by the deployment force.

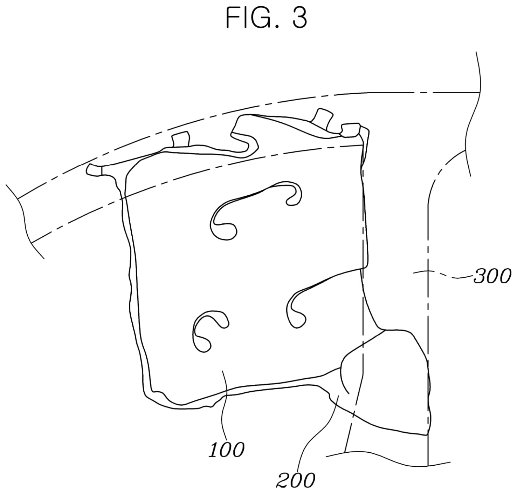

Referring to FIG. 3, which illustrates a state in which the curtain airbag for a vehicle according to the present disclosure is deployed, it can be confirmed that the auxiliary cushion 200 supports the main cushion 100 at a side of the main cushion 100. In addition, an end of the auxiliary cushion 200 contacts a trim 300 of the vehicle to support the main cushion 100, thereby preventing the main cushion 100 from being pushed rearward by the deployment force and being deployed.

In this way, the auxiliary cushion 200 supports the main cushion 100 to prevent the main cushion 100 from being eccentrically deployed. The curtain airbag for a vehicle according to the present disclosure is useful for multi-purpose vehicles such as PBV (Purpose-Built Vehicle). In vehicles such as PBV, the interior space of the vehicle is wide and windows are formed larger than in existing vehicles, making it difficult to install tethers to prevent eccentric deployment of the curtain airbag. Accordingly, when the curtain airbag for a vehicle according to the present disclosure is used, the main cushion 100 can be supported through the auxiliary cushion 200, so there is no need to install a connector connecting the airbag and the vehicle to prevent eccentric deployment of the curtain airbag.

The auxiliary cushion 200 may be provided at a side end portion of the main cushion 100. As an example, it is preferable to provide the auxiliary cushion 200 at a rear end portion of the main cushion 100. In particular, it is most preferable to provide the auxiliary cushion 200 at a rear lower end portion. This is because the main cushion 100 basically unfolds from upward to downward, that is, deploys in the direction of gravity, so there is a force component in the direction of gravity. Therefore, in order to support the force component in the direction of gravity and the force acting rearward due to the deployment force of the main cushion 100, the auxiliary cushion 200 should be provided at the rear lower end portion of the main cushion 100 to optimally support the main cushion 100.

When the auxiliary cushion 200 is deployed, an end of the auxiliary cushion 200 whose area overlaps with the main cushion 100 supports the main cushion 100, and an end of the auxiliary cushion 200 whose area does not overlap with the main cushion 100 supports the trim 300 of the vehicle.

As described above, the auxiliary cushion 200 is deployed between the trim 300 of the vehicle and the main cushion 100, so the auxiliary cushion 200 is supported by the trim 300, which is a rigid body, so as not to be pushed rearward, and thereby the auxiliary cushion 200 can support the main cushion 100 so that the main cushion 100 is not pushed rearward.

Meanwhile, according to one embodiment, the auxiliary cushion 200 may be formed by extending from the main cushion 100 in a longitudinal direction. That is, the auxiliary cushion 200 and the main cushion 100 refer to a portion of the curtain airbag for a vehicle in which a pair of panels are joined. However, when inflated, the auxiliary cushion 200 serves to support the main cushion 100, and the main cushion 100 is deployed to protect occupants. Since the auxiliary cushion 200 does not directly protect passengers, it is preferable that the auxiliary cushion 200 is formed to be smaller in size than the main cushion 100.

Meanwhile, after the auxiliary cushion 200 is folded so that a portion of the area overlaps with the main cushion 100, an end of the auxiliary cushion 200 and an end of the main cushion 100 may be connected to each other to fix the auxiliary cushion 200 to the main cushion 100.

That is, as shown in FIG. 1 and FIG. 2, the auxiliary cushion 200 is folded so that the main cushion 100 and the auxiliary cushion 200 face each other, and an end of the auxiliary cushion 200 and an end of the main cushion 100 are connected to each other. By forming an area where the auxiliary cushion 200 and the main cushion 100 overlap, the thickness of the curtain airbag becomes thicker. The area where the main cushion 100 and the auxiliary cushion 200 overlap prevents the main cushion 100 from being deployed rearward.

Meanwhile, in a state where an end of the auxiliary cushion 200 and an end of the main cushion 100 are in contact with each other, the auxiliary cushion 200 may be fixed to the main cushion 100 by sewing the corresponding ends. As shown in FIG. 2, the auxiliary cushion 200 may be fixed to the main cushion 100 by sewing 10 at a plurality of points.

Alternatively, the auxiliary cushion 200 may be fixed to the main cushion by connecting between an end of the auxiliary cushion 200 and an end of the main cushion 100 with a tether 20. However, at this time, it is preferable that the length of the tether is formed short enough to maintain a state in which the folded auxiliary cushion 200 is fixed to the main cushion 100.

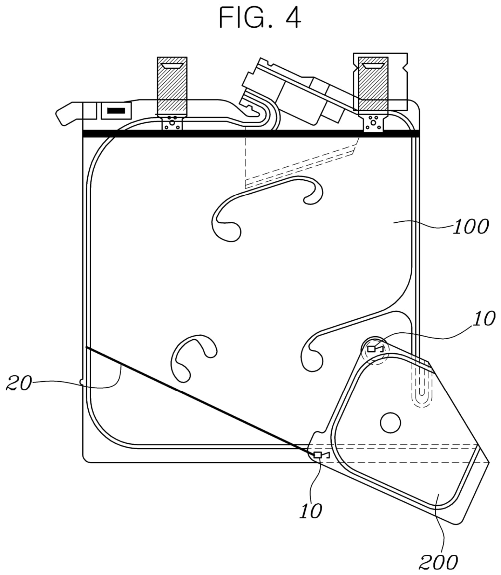

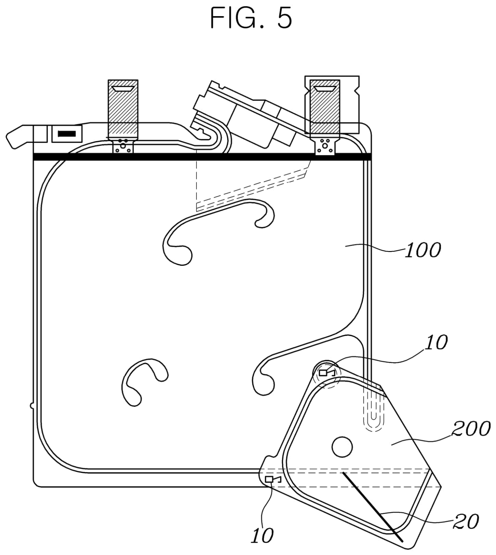

In addition, as shown in FIG. 4 and FIG. 5, some ends may be fixed through sewing, and between some ends may be connected through tethers to fix the auxiliary cushion 200 to the main cushion 100. Since the auxiliary cushion 200 can prevent eccentric deployment of the main cushion 100 only when its position is fixed, it is preferable to strongly fix the auxiliary cushion 200 to the main cushion 100 so that the position of the auxiliary cushion 200 can be well maintained.

An end of the main cushion 100 that contacts an end of the auxiliary cushion 200 is positioned in an inactive area that does not inflate, and an end of the auxiliary cushion 200 may also be positioned in an inactive area that does not inflate. That is, since the cushion is formed by joining edges of two panels, it is preferable to join inactive areas corresponding to the outside of the cushion that do not inflate to each other so as not to interfere with curtain airbag deployment.

According to one embodiment, the auxiliary cushion 200 may be formed singly or a plurality may be formed. In addition, a folding direction of the auxiliary cushion 200 may be folded toward an inboard (referring to an inner side of the vehicle) or an outboard (referring to an outer side of the vehicle) of the vehicle.

However, when the auxiliary cushion 200 is folded toward the outboard of the vehicle, a predetermined spaced space is formed between the main cushion 100 and a window of the vehicle so that the main cushion 100 can be smoothly deployed, and there may be sufficient time for contact with the body of a passenger seated on the main cushion 100, so it is preferable that the auxiliary cushion 200 is folded toward the outboard of the vehicle.

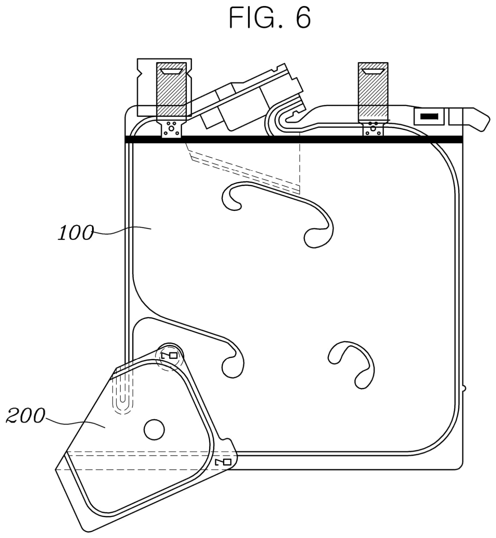

Meanwhile, the auxiliary cushion 200 may be provided at a front end or a rear end of the main cushion 100. In particular, in a front row having a driver's seat and a passenger seat, the auxiliary cushion 200 may be provided at a rear end of the main cushion 100, and in a rear row having a rear seat where passengers are seated, the auxiliary cushion 200 may be provided at a front end of the main cushion 100 as shown in FIG. 6.

When the auxiliary cushion 200 is provided as described above, the auxiliary cushion 200 is supported by a B-pillar trim of the vehicle, and each auxiliary cushion 200 supports the deployed main cushion 100, thereby preventing the main cushion 100 from being eccentrically deployed due to the deployment force of the main cushion 100.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims.

## Claims

1. A curtain airbag for a vehicle, the curtain airbag comprising:
a main cushion; and
an auxiliary cushion configured to overlap with a portion of the main cushion and support the main cushion through inflation.

2. The curtain airbag of claim 1, wherein the auxiliary cushion is provided at a side end portion of the main cushion and comprises a first portion and a second portion, and
wherein the auxiliary cushion is configured such that, through inflation, the first portion supports the main cushion and the second portion supports a trim of the vehicle.

3. The curtain airbag of claim 1 or 2, wherein the auxiliary cushion extends from the main cushion in a longitudinal direction,
wherein the auxiliary cushion is folded such that the auxiliary cushion and the main cushion overlap with each other, and
wherein an end of the auxiliary cushion and an end of the main cushion are connected to each other.

4. The curtain airbag of claim 3, wherein the end of the auxiliary cushion and the end of the main cushion are fixed by sewing to be in contact with each other.

5. The curtain airbag of claim 4, wherein the end of the main cushion that contacts the end of the auxiliary cushion is positioned in an inactive area that does not inflate, and
wherein the end of the auxiliary cushion is positioned in the inactive area.

6. The curtain airbag of any one of claims 3 to 5, further comprises a tether,
wherein the end of the auxiliary cushion and the end of the main cushion are connected to each other by the tether.

7. The curtain airbag of any one of claims 3 to 6, wherein the auxiliary cushion is folded toward an outboard of the vehicle.

8. The curtain airbag of any one of claims 1 to 7, wherein the auxiliary cushion is provided at a front end or a rear end of the main cushion.

9. The curtain airbag of claim 8, wherein, when the auxiliary cushion of the curtain airbag is applied to a front row of the vehicle, the auxiliary cushion is provided at the rear end of the main cushion, and
wherein, when the auxiliary cushion of the curtain airbag is applied to a rear row of the vehicle, the auxiliary cushion is provided at the front end of the main cushion.

10. A curtain airbag system for a vehicle, the system comprising:
a main cushion; and
an auxiliary cushion configured to overlap with a portion of the main cushion and support the main cushion through inflation,
wherein, upon deployment, a chamber is formed by the inflation of the main cushion through the chamber formed by the inflation of the auxiliary cushion, and
wherein the auxiliary cushion supports the chamber to prevent the main cushion from being pushed by a deployment force when the main cushion is inflated to enhance ejection mitigation (EJM) performance of the vehicle.

11. The system of claim 10, wherein the auxiliary cushion is provided at a side end portion of the main cushion and comprises a first portion and a second portion, and
wherein the auxiliary cushion is configured such that, through inflation, the first portion supports the main cushion and the second portion supports a trim of the vehicle.

12. The system of claim 10 or 11, wherein the auxiliary cushion extends from the main cushion in a longitudinal direction,
wherein the auxiliary cushion is folded such that the auxiliary cushion and the main cushion overlap with each other, and
wherein an end of the auxiliary cushion and an end of the main cushion are connected to each other.

13. The system of any one of claims 10 to 12, wherein the auxiliary cushion is provided at a front end or a rear end of the main cushion.
